# EUROPEAN PATENT SPECIFICATION

(11) **EP 0 902 348 B1**
(45) Date of publication and mention of the grant of the patent: **02.04.2003**
(21) Application number: 98116854.5
(22) Date of filing: 07.09.1998
(51) Int. Cl.: G05D 23/00, H01M 10/50

(54) **Battery rental apparatus**
System zur Vermietung von Batterien
Système de location de batteries

(30) Priority: 15.09.1997 JP 26938397
(43) Date of publication of application: 17.03.1999
(73) Proprietor: HONDA GIKEN KOGYO KABUSHIKI KAISHA, Minato-ku Tokyo (JP)
(72) Inventor: Hatanaka, Kaoru, 1-4-1 Chuo, Wako-shi, Saitama-ken (JP)
(74) Representative: Liska, Horst, Dr.-Ing.

(56) References cited:
- PATENT ABSTRACTS OF JAPAN vol. 1997, no. 10, 31 October 1997 (1997-10-31) & JP 09 153376 A (RICOH CO LTD), 10 June 1997 (1997-06-10)
- PATENT ABSTRACTS OF JAPAN vol. 1995, no. 01, 28 February 1995 (1995-02-28) & JP 06 293251 A (NIPPON HOME KEIZAI KENKYUSHO:KK), 21 October 1994 (1994-10-21)

## Description

This invention relates to a battery rental apparatus for an electrically-operated vehicle, and more particularly to a battery rental apparatus which keeps the temperatures of a plurality of batteries accommodated in the apparatus to a preservation temperature for the batteries.

A charging apparatus for a secondary battery which is constructed such that it accommodates and charges a plurality of secondary batteries for an electric automobile as disclosed in the official gazette of Japanese Patent Laid-Open Application No. Heisei 6-293251 is known.

In this charging apparatus, an isolation chamber for collecting and recovering or processing heat or gas generated during charging processing is provided at an uppermost portion of a support member on a tower of the apparatus and processing of heat generated when the secondary batteries are charged is perf ormed .

While the charging apparatus of the official gazette of Japanese Patent Laid-Open Application No. Heisei 6-293251 is provided with an isolation chamber for collecting and recovering or processing heat or gas, it does not have means for keeping the secondary batteries to a predetermined preservation temperature against a variation of the ambient temperature or heat generated upon charging of the secondary batteries, and where the charging apparatus is installed outdoors, there is a subject that the temperature of the secondary batteries is excessively high or excessively low and this gives rise to deterioration of the performance of the secondary batteries and the efficiency in charging drops.

Particularly, a battery rental apparatus for an electrically-operated vehicle is supposed to be installed outdoors from a utilization object of the same, and temperature control is demanded particularly since it is exposed to a high temperature environment under the direct rays of the sun or to a low temperature environment in the winter.

In order to avoid such severe environmental (temperature) conditions, the battery rental apparatus should be arranged indoors. However, where it is arranged indoors, there is a limitation to the location of a battery rental apparatus and to the number of battery rental apparatus to be installed, and there is a subject that the convenience for a user is deteriorated.

Particularly, as a motor-assist bicycle which includes a removable battery propagates, it is demanded that a user can exchange a battery anywhere and at any time.

This invention has been made to solve such subjects as described above, and it is an object of the present invention to provide a battery rental apparatus superior in convenience which can keep the preservation temperature of a battery within a fixed temperature range and can be installed at any place.

In order to solve the subjects described above, according to the present invention, a battery rental apparatus which includes a battery accommodation section for accommodating therein a plurality of removable batteries to be carried on an electrically-operated vehicle and which recovers a battery to be returned from a user and lends a battery charged already is characterized in that it comprises temperature control means for keeping the battery accommodation section within a predetermined temperature range.

Since the battery rental apparatus according to the present invention comprises temperature control means for keeping the battery accommodation section within the predetermined temperature range, even if it is installed outdoors where the temperature environmental condition is severe, it can maintain the performance of the batteries optimally.

Further, the battery rental apparatus according to the present invention is characterized in that the temperature control means includes a temperature preservation section which wraps the battery accommodation section, at least one sensor provided in the battery accommodation section or at least one external air temperature sensor provided outside the apparatus, a temperature regulator for varying the temperature of the temperature preservation section based on a temperature signal from the temperature sensor, and a temperature control section for driving the temperature regulator.

Since the temperature control means includes a temperature preservation section which wraps the battery accommodation section, at least one sensor provided in the battery accommodation section or at least one external air temperature sensor provided outside the apparatus, a temperature regulator for varying the temperature of the temperature preservation section based on a temperature signal from the temperature sensor, and a temperature control section for driving the temperature regulator, it can keep the plurality of batteries accommodated in the battery accommodation section within a fixed temperature range.

Furthermore, the battery rental apparatus according to the present invention is characterized in that the temperature control section includes temperature setting means for setting preservation temperatures of an upper limit and a lower limit for the batteries, comparison means for comparing the preservation temperatures and the temperature detected by the temperature sensor or the external air temperature sensor, and control signal generation means for controlling driving of the temperature regulator based on a temperature deviation detected by the comparison means.

Since the temperature control section includes temperature setting means for setting preservation temperatures of an upper limit and a lower limit for the batteries, comparison means for comparing the preservation temperatures and the temperature detected by the temperature sensor or the external air temperature sensor, and control signal generation means for controlling driving of the temperature regulator based on a temperature deviation detected by the comparison means, the temperature regulator can be driven only when the temperature in the battery accommodation section or the temperature of the external air comes outside the range of the preservation temperature of the set upper limit or lower limit. Therefore, stabilisation of the performance of the batteries can be anticipated and reduction in power consumption of the apparatus can be anticipated.

Further, the battery rental apparatus according to the present invention is characterized in that the temperature preservation section is formed from a heat insulating material and has a cutaway portion for ventilation and a fan for ventilation provided at an upper portion and a lower portion thereof.

Since the battery rental apparatus according to the present invention is constructed such that the temperature preservation section is formed from a heat insulating material and has a cutaway portion for ventilation and a fan for ventilation provided at an upper portion and a lower portion thereof, it can suppress a temperature variation in the battery accommodation section and can keep a plurality of batteries at a uniform temperature. Therefore, a uniform performance can be secured with the plurality of batteries.

Further, the battery rental apparatus according to the present invention is characterized in that an apparatus case has a cutaway portion for ventilation and a fan for ventilation provided therein.

Since the battery rental apparatus according to the present invention is constructed such that an apparatus case has a cutaway portion for ventilation and a fan for ventilation provided therein, the temperature in the inside of the apparatus can be made uniform and the temperature in the battery accommodation section can be kept to a preservation temperature.

It is to be noted that the present invention provides a battery rental apparatus superior in convenience which accommodates a plurality of batteries and can keep the battery temperature to a preservation temperature in response to a temperature variation of a battery accommodation section or outside the apparatus to allow returning and lending of a battery at whichever place it is installed.

In the following, an embodiment of the present invention is described with reference to the accompanying drawings.
FIG. 1 is a connection system diagram of a battery rental apparatus.
FIG. 2 is a schematic view of the battery rental apparatus.
FIG. 3 is an explanatory view explaining accommodation of a battery.
FIG. 4 is an appearance view of the battery rental apparatus showing a temperature preservation section of temperature control means according to the present invention.
FIG. 5 is a schematic view of an embodiment of the battery rental apparatus provided with the temperature control means according to the present invention.
FIG. 6 is a schematic block diagram of essential part of a temperature control section according to the present invention.

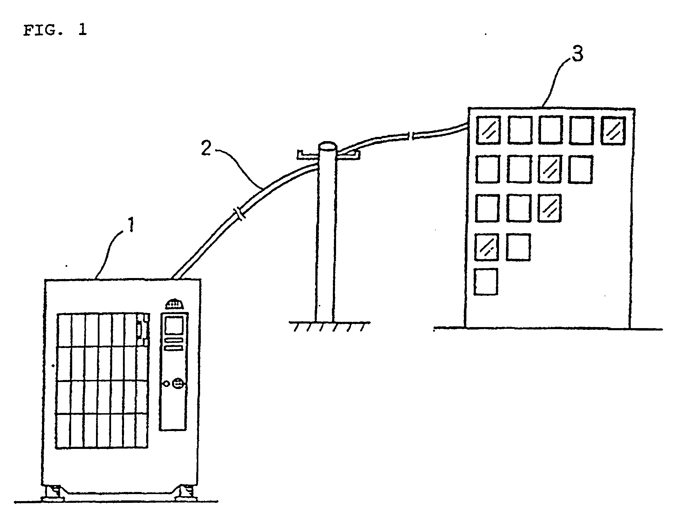

Referring to FIG. 1, the battery rental apparatus 1 is connected to a central control apparatus 3 over a communication line.

A plurality of battery rental apparatus 1 are arranged at various locations in a district taking a spread number of motor-assist bicycles, the travelling distances of motor-assist bicycles charged fully and so forth into consideration so as to provide a user (rental person) with facilities.

When a user intends to utilize the battery rental apparatus 1, it first concludes a contract regarding utilization of the battery rental apparatus 1 with a company of a battery rental system, an agent or the like.

The contents of the contract may be such that, for example, for each single motor-assist bicycle (battery) unit, a user registration number (rental ID) is registered, and if a motor-assist bicycle is actually utilized after this registration number is controlled by the central control apparatus 3 until the capacity of the battery becomes low, the battery is returned to the battery rental apparatus 1 and a fully charged battery can be lent.

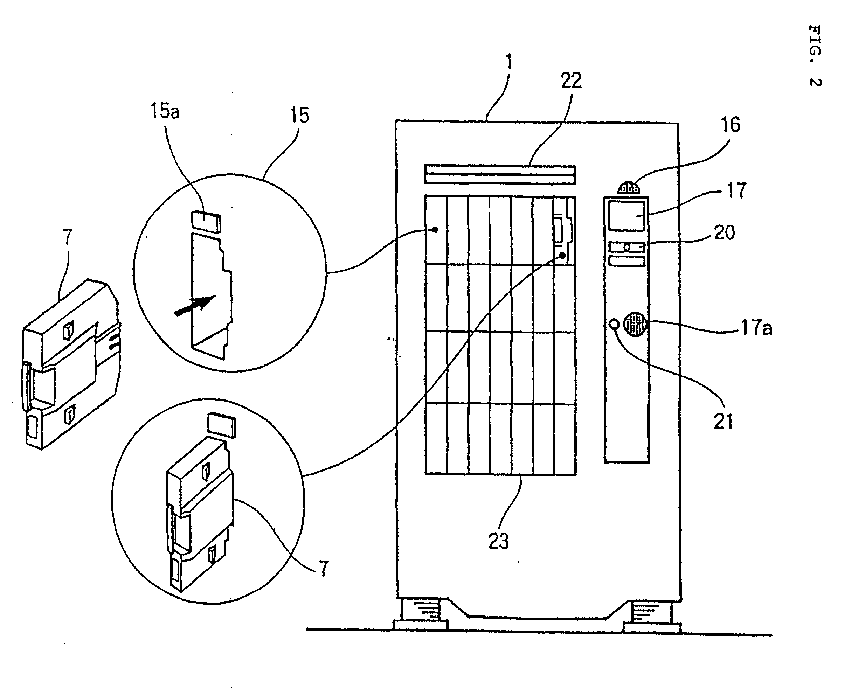

Referring to FIG. 2, the battery rental apparatus 1 includes batteries 7, accommodation sections 15, accommodation section indication lamps 15a, an alarming apparatus 16, a display unit 17, an audible indicator 17a, a personal body sensor 20, and an illumination apparatus 22.

If a user stands in front of the battery rental apparatus 1, then the personal body sensor 20 detects the user and unlocks the accommodation sections 15 to allow delivery/acceptance, and then guidance by means of the display unit 17 and the audible indicator 17a is performed.

The guidance is outputted, for example, by such voice as "Welcome! Please insert the used battery into the first bay (or accommodation section)".

If the user inserts a battery into the accommodation section 15, then the battery rental apparatus 1 locks the battery 7 and reads the identification number and unique information of the battery 7, and then effects checking of the battery identification number and discriminates whether or not a new battery can be lent.

When there is a problem in regard to the identification number of the battery 7 to be returned, the battery rental apparatus 1 indicates the reason whey the use is impossible from the display unit 17 and the audible indicator 17a, and returns the battery 7 to be returned back to the user without lending a charged battery.

If there is no problem in regard to the identification number of the battery 7 to be returned, then the amount of use of the battery 7 to be returned is checked and detected, and further, an operation procedure is indicated to the user by means of the display unit 17 and the audible indicator 17a.

Further, the remaining amount of the battery capacity when lent and the remaining amount at present of the battery 7 returned are transmitted to the central control apparatus 3 over the communication line shown in FIG. 1, and data of the used amount, the toll, the latest rental date and hour and so forth transmitted thereto from the central control apparatus 3 are indicated to the user with the audible indicator 17a and the display unit 17, and the identification number and the toll of the returned battery are stored.

Then, the battery rental apparatus 1 reports, by means of the display unit 17 and the audible indicator 17a, the accommodation section 15 of that battery 7 to be lent arranged in a plurality of stages which has been charged up fully or which has a remaining amount of 70 % or more.

In this instance, for example, guidance of "The rate of electricity consumed by you is 500 yen. Please take the battery of the second bay (or accommodation section)." is performed by voice.

The battery identification number and the remaining amount of the battery capacity of the battery 7 to be lent are stored into the battery rental apparatus 1.

After the battery remaining amount is stored into the battery 7 to be lent, the lock pin 12 provided for the battery 7 to be lent is unlocked so that the battery 7 can be taken out from the accommodation section 15 readily by the user.

After the user takes out the battery 7, for example, such operation completion that "Thank you for your utilization." is outputted by voice.

The battery rental apparatus 1 temporarily stores also the return date and hour, the toll, the number of rental times, the latest rental date and hour and so forth of the battery 7 returned and unique electric data information for charging, and transmits the data to the central control apparatus 3 over the communication line 2.

Further, the battery rental apparatus 1 receives information of an electric processing method corresponding to the data information from the central control apparatus 3, performs electric processing in accordance with an information instruction of the received information and transmits data information of a result of the electric processing performed to the central control apparatus 3 over the communication line 2.

The alarming apparatus 16 issues alarming sound when some trouble occurs, and further, upon emergency, the battery rental apparatus 1 can communicate with the company of the battery rental system through the central control apparatus 3 by means of an interphone call switch 21.

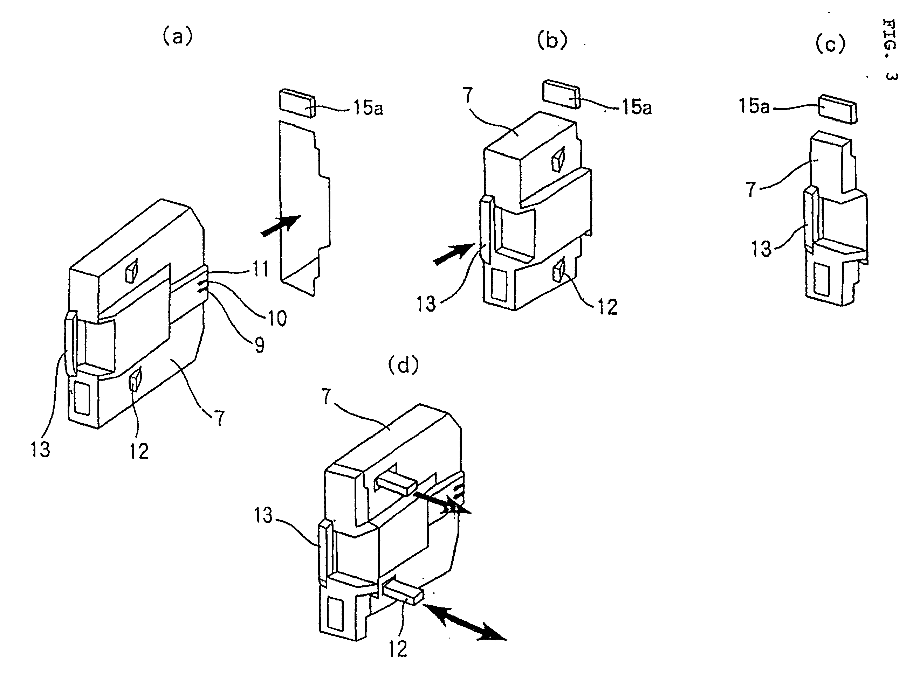

Referring to FIG. 3, the battery 7 includes a handle 13 for taking out the battery 7 from the battery accommodation section 15 of the battery rental apparatus 1, a lock pin 12 for locking, a power supplying positive terminal 9, a terminal 10 for electric measurement, and a power supplying negative terminal 11.

Charging to the battery 7 or discharging from the battery 7 is performed through the power supplying positive terminal 9 and the power supplying negative terminal 11.

Meanwhile, the terminal 10 for electric measurement transmits therethrough unique information such as the identification number such as the production number or the production year, month and day as well as data of the return date and hour, the number of times of charging and discharging operations, the rental date and hour (date and hour of lending), the battery temperature, the battery remaining amount, and so forth into storage means not shown and the unique information to a battery rental apparatus 1.

The lock pin 12 is constructed such that, if the battery 7 to be returned to the battery rental apparatus 1 is inserted into a return accommodation section 15, then the lock pin 12 is mechanically erected uprightly and the battery 7 is locked.

On the other hand, when a battery 7 to be lent is to be taken out, the lock pin 12 is pushed back by a returning metal member in the accommodation section 15 in response to a cancellation signal of the battery rental apparatus 1, and the battery 7 can be pulled out readily from the accommodation section 15 by the handle 13.

FIG. 3(a) is an explanatory view illustrating a condition wherein a used battery 7 for returning is inserted into an accommodation section 15 on which the accommodation section indication lamp 15a is flickering.

FIG. 3(b) is an explanatory view illustrating a condition during insertion, which is a condition wherein the lock pin 12 is not projected as shown in FIG. 3(d).

FIG. 3(c) is an explanatory view illustrating a condition wherein the used battery 7 for returning is pushed in fully, which is a condition wherein the lock pin 12 is projected and the battery 7 is locked.

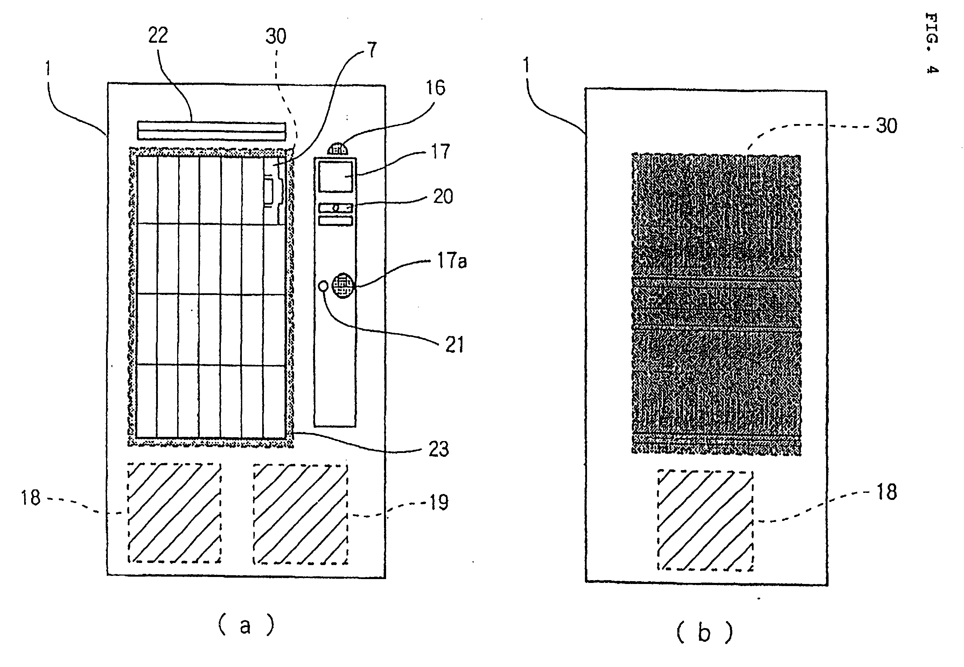

Fig. 4 shows a temperature preservation section of temperature control means according to the present invention.

A front elevational view is shown in FIG. 4(a), and a side elevational view is shown in FIG. 4(b).

Referring to FIG. 4, the battery rental apparatus 1 includes a temperature preservation section 30 which surrounds a battery accommodation section 23, which accommodates accommodating a plurality of batteries 7 therein, except the front.

The temperature preservation section 30 is formed from a heat insulating material which is superior in heat insulating property.

A charger 18 and a power supply 19 for charging the plurality of batteries 7 are arranged at a bottom portion of the battery rental apparatus 1.

Those heat sources can be utilized to raise the temperature of the batteries together with a heater.

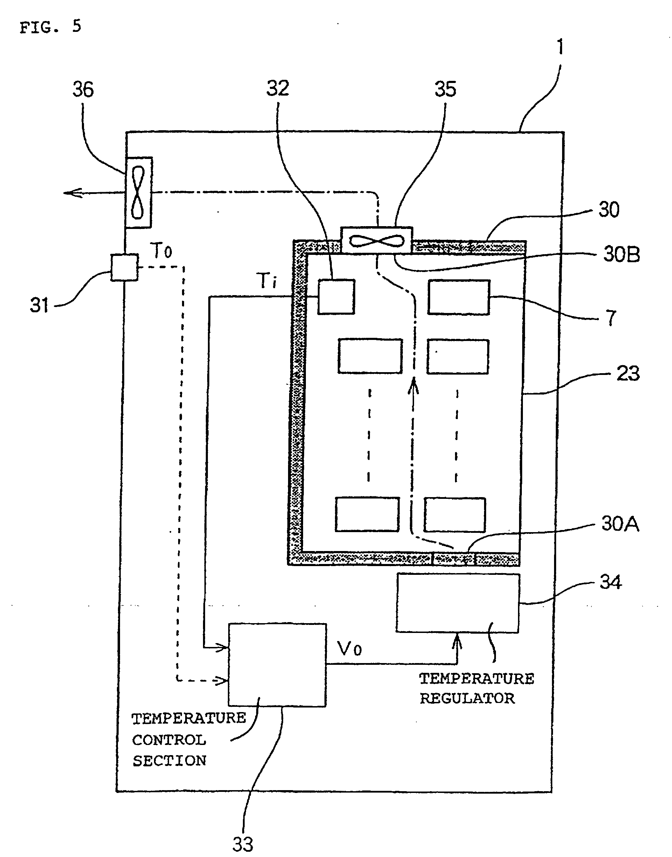

Referring to FIG. 5, the temperature control means is composed of a temperature preservation section 30 which surrounds a battery accommodation section 23, at least one temperature sensor 32 provided in the battery accommodation section 23 or at least one external air temperature sensor 31 provided outside the apparatus, a temperature regulator 34 for varying the temperature of the temperature preservation section 30 based on a temperature signal (Ti, To) from the temperature sensor (32, 31), and a temperature control section 33 for driving the temperature regulator 34.

The temperature preservation section 30 is formed such that it covers all faces of the battery accommodation section 23 except the front face (battery taking out section) with a heat insulating material so that the temperature variation in the battery accommodation section 23 may be suppressed small.

A cutaway portion 30B is provided at a top face portion of the temperature preservation section 30, and an intake fan 35 is arranged there.

Meanwhile, another cutaway portion 30A is provided on a bottom face portion of the temperature preservation section 30 so that warm wind or cool find may be blown into the battery accommodation section 23 from the temperature regulator 34.

At least one temperature sensor 32 is provided in the battery accommodation section 23, and detects the temperature Ti in the battery accommodation section 23 and supplies a temperature signal Ti to the temperature control section 33.

At least one external air temperature sensor 31 is arranged on a case of the battery rental apparatus 1, and detects an external air temperature To and supplies an external air temperature signal To to the temperature control section 33.

The temperature control section 33 includes temperature setting means, comparison means, and control signal generation means, and compares the temperature signal Ti supplied thereto from the temperature sensor 32 or the external air temperature signal To supplied thereto from the external air temperature sensor 31 and supplies a control signal Vo to the temperature regulator 34 based on a result of the detection.

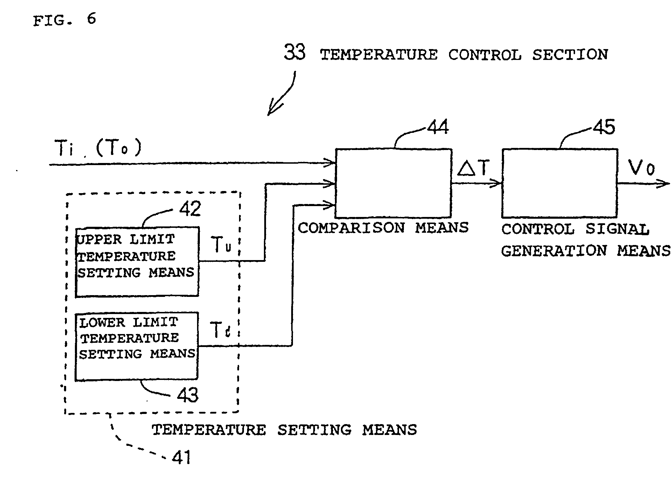

Referring to FIG. 6, the temperature control section 33 includes temperature setting means 41, comparison means 44 and control signal generation means 45.

The temperature setting means 41 includes upper limit temperature setting means 42 and lower limit temperature setting means 43.

The upper limit temperature setting means 42 is formed from a reloadable memory such as a RAM, and stores an upper limit value (for example, 30° C) to the preservation temperature for the batteries 7 and supplies an upper limit temperature signal Tu to the comparison means 44.

The lower limit temperature setting means 43 is formed from a reloadable memory such as a RAM, and stores a lower limit value (for example, 10° C) to the preservation temperature for the batteries 7 and supplies a lower limit temperature signal Td to the comparison means 44.

It is to be noted that the upper limit value and the lower limit value to the preservation temperature can be externally set freely upon installation of the battery rental apparatus 1 or in response to the season.

The comparison means 44 is formed from a comparator, an amplifier and so forth, and compares the temperature signal Ti or the external air temperature signal To with the upper limit temperature signal Tu and the lower limit temperature signal Td. When the temperature signal Ti or the external air temperature signal To is higher than the upper limit temperature signal Tu (Ti, To > Tu) or when the temperature signal Ti or the external air temperature signal To is lower than the lower limit temperature signal Td (Ti, To < Td), the comparison means 44 calculates a temperature deviation ΔT (= Tu - Ti, = Tu - To) between the upper limit temperature signal Tu and the temperature signal Ti or the external air temperature signal To or a temperature deviation ΔT (= Td - Ti, = Td - To) between the lower limit temperature signal Td and the temperature signal Ti or the external air temperature signal To, and supplies a temperature deviation signal ΔT to the control signal generation means 45.

It is to be noted that, when Ti or the external air temperature signal To is equal to or higher than the lower limit temperature signal Td but is equal to or lower than the upper limit temperature signal Tu (Td ≦ Ti, To ≦ Tu), the temperature deviation signal ΔT is set to 0.

The control signal generation means 45 is formed from a signal generator and supplies a control signal Vo corresponding to the temperature deviation signal ΔT to the temperature regulator 34.

The temperature regulator 34 is formed from a cooler and a heater, and is driven based on the control signal Vo supplied thereto from the temperature control section 33 to send warm wind or cool wind (indicated by an alternate long and short dash line in FIG. 5) into the battery accommodation section 23 through the cutaway portion 30A of the temperature preservation section 30.

If the temperature signal Ti or the external air temperature signal To is higher than the upper limit temperature signal Tu (Ti, To > Tu), then the cooler is driven to sent cool wind.

On the other hand, when the temperature signal Ti or the external air temperature signal To is lower than the lower limit temperature signal Td (Ti, To < Td), the heater is driven to send warm wind.

When Ti or the external air temperature signal To is equal to or higher than the lower limit temperature. signal Td but is equal to or lower than the upper limit temperature signal Tu (Td ≦ Ti, To ≦ Tu), the driving of the temperature regulator 34 is stopped to reduce the power consumption.

A fan 36 is provided at a cutaway portion for ventilation provided at an upper portion of the apparatus case and exhausts wind sent thereto from the fan 35 to the outside of the apparatus.

It is to be noted that another construction wherein a plurality of temperature sensors 32 or external air temperature sensors 31 are arranged and temperature control is performed with an average temperature (average value) of the temperatures detected by the individual temperature sensors may be employed.
The invention provides a battery rental apparatus superior in convenience which can keep the preservation temperature of a battery within a fixed temperature range and can be installed at any place.
To achieve this, a battery rental apparatus 1 which includes temperature control means which is composed of a temperature preservation section 30 which surrounds a battery accommodation section 23, a temperature sensor 32 or an external air temperature sensor 31, a temperature regulator 34 for varying the temperature of the temperature preservation section 30 based on a temperature signal Ti, To from the temperature sensor 32, 31 , and a temperature control section 33 for driving the temperature regulator 34.

## Claims

1. A battery rental apparatus which includes a battery accommodation section (23) for accommodating therein a plurality of removable batteries (7) to be carried on an electrically-operated vehicle and which recovers a battery to be returned from a user and lends a battery charged already, **characterized in that**
it comprises temperature control means (30-36) for keeping said battery accommodation section within a predetermined temperature range.

2. A battery rental apparatus according to claim 1, **characterized in that** said temperature control means includes (30-36) a temperature preservation section (30) which wraps said battery accommodation section (23), at least one sensor (32) provided in said battery accommodation section (23) or at least one external air temperature sensor (31) provided outside said apparatus (1), a temperature regulator (34) for varying the temperature of said temperature preservation section (30) based on a temperature signal from said temperature sensor (32, 31), and a temperature control section (33) for driving said temperature regulator (34).

3. A battery rental apparatus according to claim 2, **characterized in that** said temperature control section (33) includes temperature setting means (41) for setting preservation temperatures of an upper limit and a lower limit for the batteries, comparison means (44) for comparing the preservation temperatures and the temperature detected by said temperature sensor (32) or said external air temperature sensor (31), and control signal generation means (45) for controlling driving of said temperature regulator (34) based on a temperature deviation detected by said comparison means (44).

4. A battery rental apparatus according to claim 2, **characterized in that** said temperature preservation section (30) is formed from a heat insulating material and has a cutaway portion (30A,B) for ventilation and a fan (35) for ventilation provided at an upper portion and a lower portion thereof.

5. A battery rental apparatus according to claim 1, **characterized in that** an apparatus case (30) has a cutaway portion (30A, B) for ventilation and a fan (35) for ventilation provided therein.

## Patentansprüche

1. Batterievermietungsvorrichtung, die einen Batterieaufnahmeabschnitt (23) enthält, um darin eine Mehrzahl entfernbarer Batterien (7) aufzunehmen, die an einem elektrisch betriebenen Fahrzeug zu tragen sind, und die eine von einem Benutzer zurückzubringende Batterie wiederverwertet und eine bereits geladene Batterie zur Verfügung stellt, **dadurch gekennzeichnet, dass**
sie ein Temperatursteuermittel (30 - 36) umfasst, um den Batterieaufnahmeabschnitt innerhalb eines vorbestimmten Temperaturbereichs zu halten.

2. Batterievermietungsvorrichtung nach Anspruch 1, **dadurch gekennzeichnet, dass** das Temperatursteuermittel (30 - 36) einen Temperaturerhaltungsabschnitt (30) enthält, der den Batterieaufnahmeabschnitt (23) umhüllt, zumindest einen Sensor (32), der in dem Batterieaufnahmeabschnitt (23) vorgesehen ist, oder zumindest einen Außenlufttemperatursensor (31), der außerhalb der Vorrichtung (1) vorgesehen ist, einen Temperaturregler (34) zum Ändern der Temperatur des Temperaturerhaltungsabschnitts (30) auf der Basis eines Temperatursignals von dem Temperatursensor (32, 31), sowie einen Temperatursteuerabschnitt (33) zum Betreiben des Temperaturreglers (34).

3. Batterievermietungsvorrichtung nach Anspruch 2, **dadurch gekennzeichnet, dass** der Temperatursteuerabschnitt (33) ein Temperatureinstellmittel (41) enthält, um Erhaltungstemperaturen einer Obergrenze und einer Untergrenze für die Batterien einzustellen, ein Vergleichsmittel (44) zum Vergleichen der Erhaltungstemperaturen mit der Temperatur, die von dem Temperatursensor (32) oder dem Außenlufttemperatursensor (31) erfasst ist, sowie ein Steuersignalerzeugungsmittel (45) zum Steuern des Betriebs des Temperaturreglers (34) auf der Basis einer von dem Vergleichsmittel (44) erfassten Temperaturabweichung.

4. Batterievermietungsvorrichtung nach Anspruch 2, **dadurch gekennzeichnet, dass** der Temperaturerhaltungsabschnitt (30) aus einem wärmeisolierenden Material gebildet ist und einen Ausschnitt (30A, B) zur Ventilation sowie ein Gebläse (35) zur Ventilation aufweist, die an einem oberen Abschnitt und einem unteren Abschnitt davon vorgesehen sind.

5. Batterievermietungsvorrichtung nach Anspruch 1, **dadurch gekennzeichnet, dass** in einem Vorrichtungsgehäuse (30) ein Ausschnitt (30A, B) zur Ventilation und ein Gebläse (35) zur Ventilation vorgesehen sind.

## Revendications

1. Dispositif de location de batteries, comprenant une section de stockage de batteries (23), pour y stocker une pluralité de batteries amovibles (7) devant être montées sur un véhicule à propulsion électrique, et qui récupère une batterie retournée d'un utilisateur et fournit une batterie déjà chargée, **caractérisé en ce qu'**il comprend des moyens de commande de la température (30 à 36) pour maintenir ladite section de stockage de batteries dans une plage de températures prédéterminée.

2. Dispositif de location de batteries selon la revendication 1, **caractérisé en ce que** lesdits moyens de commande de température (30 à 36) comprennent une section de préservation de la température (30) qui entoure ladite section de stockage de batteries (23), au moins un capteur (32) prévu dans ladite section de stockage de batteries (23) ou au moins un capteur de. température d'air extérieur (31) monté à l'extérieur dudit dispositif (1), un régulateur de température (34) pour faire varier la température de ladite section de préservation de la température (30) d'après un signal de température provenant dudit capteur de température (32, 31), et une section de commande de température (33), pour commander ledit régulateur de température (34).

3. Dispositif de location de batteries selon la revendication 2, **caractérisé en ce que** ladite section de commande de température (33) comprend des moyens de réglage de température (41) pour régler des températures de préservation d'une limite supérieure et d'une limite inférieure pour les batteries, des moyens de comparaison (44) pour comparer les températures de préservation et la température détectée par ledit capteur de température (32) ou ledit capteur de température d'air externe (31), et des moyens de génération de signal de commande (45) pour commander la fonction dudit régulateur de température (34) d'après un écart de température détecté par lesdits moyens de comparaison (44).

4. Dispositif de location de batteries selon la revendication 2, **caractérisé en ce que** ladite section de préservation de la température (30) est formée d'un matériau isolant de la chaleur et a une partie ouverte (30A, B) pour la ventilation et un ventilateur (35) de ventilation installé en une partie supérieure et en une partie inférieure de celle-ci.

5. Dispositif de location de batteries selon la revendication 1, **caractérisé en ce qu'**un boîtier d'appareillage (30) a une partie ouverte (30A, B) pour la ventilation et un ventilateur (35) pour la ventilation, y étant installé.
